# EUROPÄISCHE PATENTANMELDUNG

(11) **EP 1 564 438 A2**
(43) Veröffentlichungstag der Anmeldung: **17.08.2005**
(21) Anmeldenummer: 05003172.3
(22) Anmeldetag: 15.02.2005
(51) Int. Cl.: F16G 13/16

(54) **Kettenglied für eine Energieführungskette**

(30) Priorität: 17.02.2004 DE 102004007891
(71) Anmelder: Murrplastik Systemtechnik GmbH, 71570 Oppenweiler (DE)
(72) Erfinder: Scharf-Martini, Lutz, 73614 Schorndorf (DE); Thaidigsmann, Hans, 71546 Aspach (DE); Funk, Rainer, 71543 Wüstenrot (DE); Jostmeier, Helmut, 74420 Oberrot b. Gaildorf (DE)
(74) Vertreter: Reule, Hanspeter, Dr.

(57) **Zusammenfassung**

Die Erfindung betrifft ein Kettenglied für eine Energieführungskette mit einem Strukturelement (1), das mindestens einen Führungskanal (10) zur Aufnahme mindestens einer Leitung (12) aufweist, welcher durch eine Begrenzungsfläche (16, 18, 20) begrenzt wird. Erfindungsgemäß ist vorgesehen, dass auf der Begrenzungsfläche (16, 18, 20) eine Beschichtung (14) angebracht ist, deren Oberflächenrauhigkeit geringer ist als die Oberflächenrauhigkeit des Strukturelements (1).

## Beschreibung

Die Erfindung betrifft ein Kettenglied für eine Energieführungskette gemäß Oberbegriff des Anspruchs 1 sowie ein Verfahren zur Herstellung eines Kettenglieds für eine Energieführungskette gemäß Oberbegriff des Anspruchs 12.

Energieführungsketten sind aus Kettengliedern aufgebaut, die ein Strukturelement aus einem belastbaren Material aufweisen. Dieses ist in der Regel glasfaserverstärkter Kunststoff, der zwar bei hoher Festigkeit ein geringes Gewicht aufweist, dessen Oberfläche aber sehr rauh ist. Im Inneren der Energieführungskette sind in einem oder mehreren Führungskanälen Leitungen, wie beispielsweise Kabel, geführt, die eine Außenhülle aus einem weichen Kunststoff, wie Polyurethan (PUR) oder Polyvinylchlorid (PVC), besitzen. Wenn die Energieführungskette im Betrieb bewegt wird, kommt es zu Relativbewegungen zwischen der weichen Kabelhülle und den Flächen des Strukturelements, die die Begrenzungsfläche des Führungskanals bilden. Die Rauhigkeit der Begrenzungsfläche bewirkt eine Abnutzung der Außenhülle der Kabel, so dass diese nach Erreichen einer bestimmten Lebensdauer ausgetauscht werden müssen. Dies führt zu hohen Kosten bedingt durch Stillstand der Kette und Montage neuer Kabel sowie zu hohen Materialkosten.

Es ist daher Aufgabe der Erfindung, ein Kettenglied der eingangs genannten Art derart weiterzubilden, dass der Verschleiß der in ihm geführten Leitungen vermindert und deren Lebensdauer erhöht wird.

Die Aufgabe wird erfindungsgemäß durch ein Kettenglied mit den Merkmalen des Anspruchs 1 gelöst. Anspruch 12 gibt ein Verfahren zur Herstellung eines solchen Kettenglieds an.

Der Erfindung liegt der Gedanke zugrunde, den Verschleiß von in der Energieführungskette geführten Leitungen dadurch zu vermindern, dass die Teile der Energieführungskette bzw. ihrer Kettenglieder, mit denen die Leitungen in Berührung kommen, mit einem reibungsmindernden Überzug versehen werden.

Vorzugsweise weist das Strukturelement zwei im wesentlichen parallel zueinander angeordnete Seitenglieder und mindestens einen die Seitenglieder miteinander verbindenden Rahmensteg auf, die den Führungskanal oder die Führungskanäle zumindest teilweise umschließen. Zusätzlich kann das Strukturelement einen oder mehrere quer zu dem Rahmensteg angeordnete Trennstege und/oder einen oder mehrere quer zu den Seitengliedern angeordnete Regalböden aufweisen. Das Strukturelement verfügt dann über mehrere Führungskanäle. Zweckmäßig erstreckt sich die Beschichtung auf mindestens eine Auflagefläche für die Leitung. Auflageflächen, auf denen die Leitung oder die Leitungen mit ihrem Gewicht aufliegen, verursachen im Betrieb der Kette einen besonders hohen Abrieb an der Leitung. Vorteilhafterweise erstreckt sich die Beschichtung auch auf mindestens eine vertikale Seitenfläche der Begrenzungsfläche. Auf dieser liegt die Leitung zwar nicht mit ihrem Gewicht auf, so dass hier weniger Verschleiß zu erwarten ist. Im Betrieb der Kette werden jedoch auch Seitenflächen gegenüber der Leitung oder den Leitungen bewegt, so dass es auch hier zu Abrieb kommen kann.

Als Beschichtung kommt eine Metallschicht in Frage. Diese kann auf das Strukturelement aufgedampft, aufgesputtert, aufgewalzt oder aufgalvanisiert werden. Auch eine Kunststoffschicht mit geringem Reibungskoeffinzienten, wie beispielsweise eine Teflonschicht (PFTE), kommt für die Beschichtung in Frage. Eine geringe Oberflächenrauhigkeit weist auch eine Schicht aus keramischem Material auf. Besonders vorteilhaft ist eine Beschichtung aus Gleitlack. Gleitlacke sind im Prinzip Industrielacke mit Pigmenten aus schmierwirksamen Substanzen. Hierbei kommt als schmierwirksame Substanz insbesondere MoS₂ in Frage. Die Beschichtung kann auch zusätzlich ein Schmiermittel, hierbei insbesondere ebenfalls MoS₂, aufweisen.

Für die Herstellung des erfindungsgemäßen Kettenglieds ist es besonders vorteilhaft, wenn dieses aus Einzelteilen zusammengesetzt wird. Einzelteile sind als Grundelemente zwei Seitenglieder sowie mindestens ein die Seitenglieder miteinander verbindender Rahmensteg. Als zusätzliche Bauteile kann das Kettenglied einen oder mehrere quer zu dem Rahmensteg verlaufende Trennstege sowie einen oder mehrere quer zu den Seitengliedern verlaufende Regalböden aufweisen, so dass im Inneren des Kettenglieds mehrere Führungskanäle für Leitungen gebildet werden. Die einzelnen Bauteile werden vor dem Zusammenbau an Oberflächenpartien mit einem reibungsmindernden Überzug beschichtet, die die Begrenzungsflächen bilden und mit den Leitungen in Berührung kommen können. Es ist erheblich einfacher, die Einzelteile des Kettenglieds vor dem Zusammenbau zu beschichten als die Beschichtung auf die Begrenzungsfläche des Führungskanals des zusammengebauten Kettenglieds aufzubringen. Dabei können die gesamten Oberflächen der Bauteile beschichtet werden oder nur ausgewählte Partien, die mit den Leitungen in Berührung kommen können.

Eine erfindungsgemäße Energieführungskette weist ein oder mehrere derartige Kettenglieder auf. Vorzugsweise besteht sie ausschließlich aus solchen Kettengliedern.

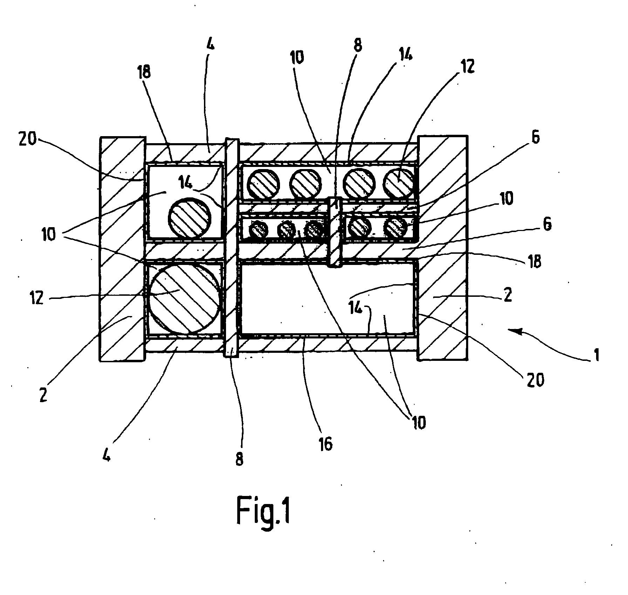

Im Folgenden wird die Erfindung anhand eines in der Zeichnung dargestellten Ausführungsbeispiels näher erläutert. Es zeigt
- Fig. 1: einen Querschnitt durch ein erfindungsgemäßes Kettenglied einer Energieführungskette.

Ein Kettenglied einer Energieführungskette gemäß Fig. 1 weist ein Strukturelement 1 mit zwei parallel zueinander verlaufenden Seitengliedern 2 sowie zwei die Seitenglieder 2 miteinander verbindenden, eine Decke und einen Boden bildenden Rahmenstegen 4 auf. Das Innere des Strukturelements 1 ist durch zwei quer zu den Seitengliedern 2 angeordnete Regalböden 6 und zwei quer zu den Rahmenstegen 4 bzw. den Regalböden 6 angeordnete Trennstege 8 in sechs Führungskanäle 10 unterteilt, die jeweils der Aufnahme einer oder mehrerer Leitungen 12 dienen. Die Führungskanäle 10 werden durch Oberflächen der Seitenglieder 2, Rahmenstege 4, Regalböden 6 und Trennstege 8 begrenzt, die für jeden Führungskanal 10 eine Begrenzungsfläche 16, 18, 20 bilden. Die Seitenglieder 2, Rahmenstege 4, Regalböden 6 und Trennstege 8 sind jeweils aus glasfaserverstärktem Kunststoff gefertigt und weisen eine hohe Festigkeit bei gleichzeitig geringem Gewicht, aber großer Oberflächenrauhigkeit auf. Um die Reibung zwischen dem Strukturelement 1 und den in ihm geführten Leitungen 12, und damit den Verschleiß der Leitungen 12, zu vermindern, sind die Begrenzungsflächen 16, 18, 20 der Führungskanäle 10 jeweils mit einer Beschichtung 14 aus einem reibungsmindernden Material versehen. Im hier dargestellten Ausführungsbeispiel besteht die Beschichtung 14 aus einem Gleitlack, der eine schmierwirksame Substanz enthält. Der Gleitlack ist zum einen an den Teilen der Begrenzungsflächen 16, 18 aufgebracht, die als Auflageflächen für die Leitungen dienen. Dies sind einerseits die unteren horizontal verlaufenden Teilflächen 16 der Begrenzungsflächen, auf denen die Leitungen 12 mit ihrem Gewicht aufliegen. Andererseits sind dies auch die oberen horizontal verlaufenden Teilflächen 18 der Begrenzungsflächen, auf denen die Leitungen 12 dann mit ihrem Gewicht aufliegen, wenn das Kettenglied beim Bewegen der Kette umgeklappt wird. Desweiteren sind auch die vertikalen Seitenflächen 20 der Begrenzungsflächen mit Gleitlack beschichtet.

Bei der Herstellung des Kettenglieds werden zuerst die Oberflächenpartien der Seitenglieder 2, Rahmenstege 4, Regalböden 6 und Trennstege 8 mit Gleitlack beschichtet, die bei zusammengebautem Kettenglied die Führungskanäle 10 begrenzen. Anschließend werden die beschichteten Bauteile zum fertigen Kettenglied zusammengesetzt. Aus mehreren erfindungsgemäßen Kettengliedern wird die Energieführungskette zusammengesetzt.

### Zusammenfassend ist folgendes festzuhalten:

Die Erfindung betrifft ein Kettenglied für eine Energieführungskette mit einem Strukturelement 1, das mindestens einen Führungskanal 10 zur Aufnahme mindestens einer Leitung 12 aufweist, welcher durch eine Begrenzungsfläche 16, 18, 20 begrenzt wird. Erfindungsgemäß ist vorgesehen, dass auf der Begrenzungsfläche 16, 18, 20 eine Beschichtung 14 angebracht ist, deren Oberflächenrauhigkeit geringer ist als die Oberflächenrauhigkeit des Strukturelements 1.

## Patentansprüche

1. Kettenglied für eine Energieführungskette mit einem Strukturelement (1), das mindestens einen Führungskanal (10) zur Aufnahme mindestens einer Leitung (12) aufweist, welcher durch eine Begrenzungsfläche (16, 18, 20) begrenzt wird, **dadurch gekennzeichnet, dass** auf der Begrenzungsfläche (16, 18, 20) eine Beschichtung (14) angebracht ist, deren Oberflächenrauhigkeit geringer ist als die Oberflächenrauhigkeit des Strukturelements (1).

2. Kettenglied nach Anspruch 1, **dadurch gekennzeichnet, dass** das Strukturelement (1) zwei im wesentlichen parallel zueinander angeordnete Seitenglieder (2) und mindestens einen die Seitenglieder (2) miteinander verbindenden Rahmensteg (4) aufweist, die den Führungskanal (10) oder die Führungskanäle zumindest teilweise umschließen.

3. Kettenglied nach Anspruch 2, **dadurch gekennzeichnet, dass** das Strukturelement (1) mindestens einen quer zu dem Rahmensteg (4) angeordneten Trennsteg (8) und/oder mindestens einen quer zu den Seitengliedern (2) angeordneten Regalboden (6) aufweist.

4. Kettenglied nach einem der vorangehenden Ansprüche, **dadurch gekennzeichnet, dass** die Begrenzungsfläche mindestens eine Auflagefläche (16, 18) für die Leitung (12) aufweist und dass sich die Beschichtung (14) auf die Auflagefläche (16, 18) erstreckt.

5. Kettenglied nach einem der vorangehenden Ansprüche, **dadurch gekennzeichnet, dass** die Begrenzungsfläche mindestens eine vertikale Seitenfläche (20) aufweist und dass sich die Beschichtung (14) auf die Seitenfläche (20) erstreckt.

6. Kettenglied nach einem der vorangehenden Ansprüche, **dadurch gekennzeichnet, dass** die Beschichtung (14) ein auf das Strukturelement (1) aufgedampftes, aufgesputtertes, aufgewalztes oder aufgalvanisiertes Metall aufweist.

7. Kettenglied nach einem der Ansprüche 1 bis 5, **dadurch gekennzeichnet, dass** die Beschichtung (14) einen Kunststoff, insbesondere Teflon (PFTE), aufweist.

8. Kettenglied nach einem der Ansprüche 1 bis 5, **dadurch gekennzeichnet, dass** die Beschichtung (14) einen Gleitlack aufweist.

9. Kettenglied nach einem der Ansprüche 1 bis 5, **dadurch gekennzeichnet, dass** die Beschichtung (14) ein keramisches Material aufweist.

10. Kettenglied nach einem der vorangehenden Ansprüche, **dadurch gekennzeichnet, dass** die Beschichtung (14) ein Schmiermittel aufweist.

11. Energieführungskette, **gekennzeichnet durch** mindestens ein Kettenglied nach einem der vorangehenden Ansprüche.

12. Verfahren zur Herstellung eines Kettenglieds für eine Energieführungskette, welches ein mindestens einen Führungskanal (10) für mindestens eine Leitung (12) aufweisendes Strukturelement (1) aufweist, das aus zwei Seitengliedern (2), mindestens einem die Seitenglieder (2) miteinander verbindenden Rahmensteg (4) und gegebenenfalls mindestens einem quer zu dem Rahmensteg (4) anzuordnenden Trennsteg (8) und/oder mindestens einem quer zu den Seitengliedern (2) anzuordnenden Regalboden (6) zusammengesetzt wird, **dadurch gekennzeichnet, dass** die Seitenglieder (2) und/oder die Rahmenstege (4) und/oder die Trennstege (8) und/oder die Regalböden (6) an einer den Führungskanal (10) begrenzenden Begrenzungsfläche (16, 18, 20) vor dem Zusammensetzen zumindest teilweise mit einer Beschichtung (14) versehen werden, die eine geringere Oberflächenrauhigkeit aufweist als die zu beschichtende Begrenzungsfläche (16, 18, 20).

13. Verfahren nach Anspruch 12, **dadurch gekennzeichnet, dass** als Beschichtung (14) ein Metall aufgedampft, aufgesputtert, aufgewalzt oder aufgalvanisiert wird.

14. Verfahren nach Anspruch 12, **dadurch gekennzeichnet, dass** als Beschichtung (14) ein Kunststoff, insbesondere Teflon (PFTE), auf die den Führungskanal (10) begrenzende Begrenzungsfläche (16, 18, 20) aufgebracht wird.

15. Verfahren nach Anspruch 12, **dadurch gekennzeichnet, dass** als Beschichtung ein Gleitlack auf die den Führungskanal (10) begrenzende Begrenzungsfläche (16, 18, 20) aufgebracht wird.

16. Verfahren nach Anspruch 12, **dadurch gekennzeichnet, dass** als Beschichtung (14) ein keramisches Material auf die den Führungskanal (10) begrenzende Begrenzungsfläche (16, 18, 20) aufgebracht wird.

17. Verfahren nach einem der Ansprüche 12 bis 16, **dadurch gekennzeichnet, dass** die Beschichtung (14) mit einem Schmiermittel versehen wird.
